# FASCICULE DE BREVET EUROPEEN

(11) **EP 3 005 538 B1**
(45) Date de publication et mention de la délivrance du brevet: **17.05.2017**
(21) Numéro de dépôt: 14734868.4
(22) Date de dépôt: 02.06.2014
(51) Int. Cl.: H02K 21/16, H02K 1/27

(54) **MOTEUR ÉLECTRIQUE SYNCHRONE À AIMANTS PERMANENTS**
SYNCHRONMOTOR MIT PERMANENTMAGNETEN
SYNCHRONOUS MOTOR WITH PERMANENT MAGNET

(30) Priorité: 05.06.2013 FR 1355145
(43) Date de publication de la demande: 13.04.2016
(73) Titulaire: Valeo Equipements Electriques Moteur, 94046 Créteil Cedex (FR)
(72) Inventeur: BOUARROUDJ, Lilya, 94220 Charenton Le Pont (FR); MATT, Jean-Claude, 21000 Dijon (FR)
(86) Numéro de dépôt international: PCT/FR2014/051297
(87) Numéro de publication internationale: WO 2014/195615

(56) Documents cités:
- WO-A2-2013/060960
- US-A1- 2012 038 237
- US-A1- 2013 038 162
- US-A1- 2013 038 165

## Description

### DOMAINE TECHNIQUE DE L'INVENTION.

La présente invention concerne un moteur synchrone à aimants permanents pour des applications dans le domaine de l'automobile, notamment pour un compresseur électrique.

### ARRIERE PLAN TECHNOLOGIQUE DE L'INVENTION.

De par leurs performances accrues en termes de rendement et de puissance massique et volumique, les machines synchrones à aimants permanents trouvent aujourd'hui une large application dans le domaine des véhicules automobiles.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 15 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Un autre exemple d'application de machines électriques de cette gamme de puissance est l'entraînement d'un compresseur centrifuge d'un système de double suralimentation d'un moteur thermique. Le compresseur électrique assiste à bas régime le turbo-compresseur entraîné par les gaz d'échappement et permet de franchir une étape supplémentaire dans la réduction des cylindrées.

Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Toutefois, les batteries de ces véhicules électriques sont sensibles aux conditions climatiques, et l'autonomie du véhicule peut être fortement réduite dans les conditions les plus dures. Un système de climatisation est donc nécessaire.

Dans les véhicules à moteur thermique, le compresseur du système de climatisation est généralement couplé mécaniquement à ce moteur.

Dans les véhicules électriques le compresseur est entraîné par un moteur électrique qui doit satisfaire à de nombreuses contraintes, non seulement en termes de puissance, de couple, et de vitesse de rotation, mais aussi d'encombrement et de masse. Le document US 2012/038237 A1 décrit un moteur électrique synchrone à aimants permanents selon le préambule de la revendication 1.

Un moteur de ce type est étudié dans un article présenté lors de la conférence "Progress in Electromagnetism Research Symposium", en 2011, à Marrakech, Maroc, par M. Khanchoul et ali ("Design and study of a permanent magnet synchronous motor", p. 160, PIERS, 20 - 23 mars 2011).

Il s'agit d'un moteur synchrone à aimants permanents de type NdFeB, d'une puissance nominale de 6 kW, présentant un couple maximum de 6 Nm et une vitesse maximale de 10.000 T/mn. La masse du moteur est inférieure à 2 kg et sa longueur est inférieure à 50 mm.

Dans ces circonstances, afin de satisfaire à des contraintes énergétiques toujours plus grandes, l'entité inventive a constaté un besoin pour un moteur présentant un rendement accru.

### DESCRIPTION GENERALE DE L'INVENTION.

Le but de la présente invention est donc d'optimiser des paramètres dimensionnels d'un moteur du type précité pour obtenir le meilleur rendement possible.

Elle a précisément pour objet un moteur électrique synchrone à aimants permanents selon la revendication 1.

Le rotor du moteur selon l'invention comprend en outre avantageusement au moins une pluralité de seconds évidements qui se prolongent axialement et qui sont agencés entre les aimants permanents dans une partie intermédiaire du rotor entre la partie centrale et la partie circonférentielle.

Des tirants sont de préférence agencés dans ces seconds évidements.

On tirera bénéfice du fait que les aimants permanents du moteur selon l'invention sont constitués de ferrite.

L'invention concerne aussi un compresseur électrique, destiné à équiper un véhicule automobile, remarquable en ce qu'il comprend un moteur électrique synchrone à aimants permanents présentant les caractéristiques ci-dessus, et, de manière générale, tout équipement d'un véhicule automobile constitué d'un tel moteur.

Ces quelques spécifications essentielles auront rendu évidents pour l'homme de métier les avantages apportés par le moteur électrique synchrone à aimants permanents selon l'invention, ainsi que par le compresseur électrique qui l'utilise, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** montre une vue en coupe radiale simplifiée d'un rotor à aimants permanents agencé dans un stator, montré en coupe radiale partielle, d'un moteur électrique synchrone d'un type correspondant au mode de réalisation principal de l'invention.
La **Figure 2** montre la variation des pertes statoriques par effet Joule en fonction du rapport dimensionnel rotor/ stator d'un moteur électrique synchrone d'un type correspondant au mode de réalisation principal de l'invention.
La **Figure 3** montre la variation de la constante de force électromotrice d'un moteur électrique synchrone d'un type correspondant au mode de réalisation principal de l'invention en fonction du rapport dimensionnel rotor/ stator.
La **Figure 4** montre la variation de la résistance statorique d'un moteur électrique synchrone d'un type correspondant au mode de réalisation principal de l'invention en fonction du rapport dimensionnel rotor/ stator.

### DESCRIPTION DES MODES DE REALISATIONS PREFERES DE L'INVENTION.

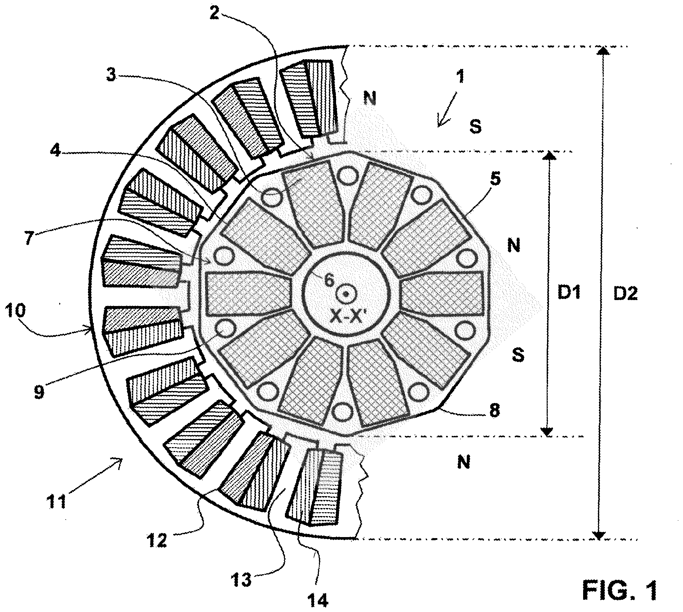

La coupe radiale simplifiée d'un rotor 1 à aimants permanents correspondant au mode de réalisation principal de l'invention, représentée sur la Figure 1, montre bien l'agencement dans une culasse 2 des aimants permanents 3 dans des premiers évidements 4 répartis régulièrement entre une partie circonférentielle 5 et une partie centrale 6 de manière à former une pluralité de pôles Nord N et pôles Sud S alternés.

Le rotor 1 du moteur selon l'invention est du type à concentration de flux. Les aimants permanents 3 sont globalement de section sensiblement rectangulaire, mais chanfreinés en forme de coin vers l'axe X-X' du rotor 1. Ils s'étendent symétriquement au voisinage de plans axiaux équi-angulaires.

Les premiers évidements 4 dans lesquels sont agencés les aimants permanents 3 délimitent, dans l'exemple particulier représenté, dix sections polaires 7 circonférentielles.

L'ensemble de ces sections polaires 7 forme en coupe radiale une figure sensiblement circulaire à plusieurs lobes 8, correspondant à la saillance des pôles N, S.

Les sections polaires 7 comportent des deuxièmes évidements 9 agencés entre les aimants permanents 3. Elles s'étendent symétriquement au voisinage de plans axiaux équi-angulaires.

Ces deuxièmes évidements 9 présentent une section circulaire et reçoivent des tirants maintenant les paquets de tôles métalliques formant la culasse 2 du rotor 1.

Ces deuxièmes évidements 9 contribuent également au contrôle du champ magnétique dans le rotor 1.

Dans une forme de réalisation particulière du moteur selon l'invention, le rotor 1, comportant dix aimants permanents 3 constitué de ferrite, tourne à l'intérieur d'une carcasse 10 d'un stator 11 présentant une pluralité d'encoches 12 définissant une pluralité de dents statoriques 13 autour desquelles sont agencés des bobinages statoriques 14.

Une réalisation concrète est par exemple un moteur 1, 11 de 8 à 15 KW pour des applications dans des véhicules automobiles du type dits «mild-hybrid».

Ce moteur 1, 11 peut être conçu pour le démarrage du moteur thermique, l'assistance en couple du moteur thermique, la traction électrique à faible vitesse du véhicule ainsi que pour l'entraînement d'un compresseur centrifuge.

Les bobinages statoriques 14 sont parcourus par un courant statorique et créent un champ magnétique tournant entraînant le rotor 1. Le couple moteur fourni dépend notamment de l'intensité du courant statorique et du flux magnétique dans le rotor 1.

Une recherche d'une augmentation des performances du moteur 1, 11 en terme de couple moteur conduit le plus souvent à une diminution du rendement du moteur à cause de l'augmentation des pertes statoriques par effet Joule P_{J} dans les bobinages statoriques 14.dues à l'augmentation du courant statorique.

L'entité inventive a découvert au moyen de simulations sur ordinateur qu'il était possible d'augmenter le rendement du moteur 1, 11, par une diminution des pertes statoriques par effet Joule P_{J}, en optimisant un rapport dimensionnel r caractéristique égal à un premier diamètre extérieur D1 du rotor 1 sur un second diamètre extérieur D2 du stator 11.

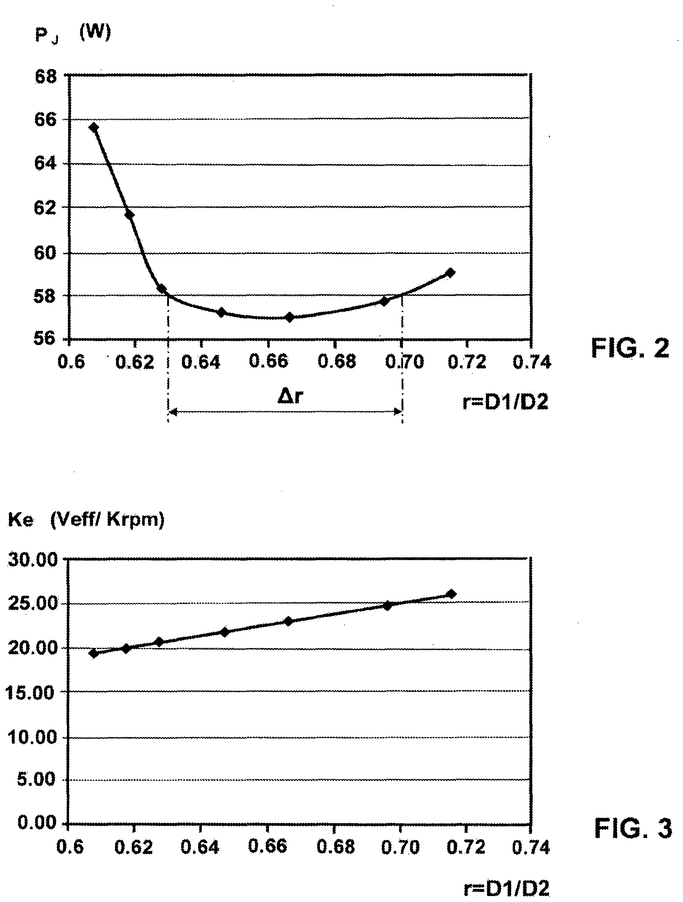

Comme le montre bien la **Figure 2****,** les pertes statoriques par effet Joule P_{J} exprimées en fonction de r =D1/D2 présentent un net minimum pour r compris dans une fourchette Δr allant de 0,63 à 0,70.

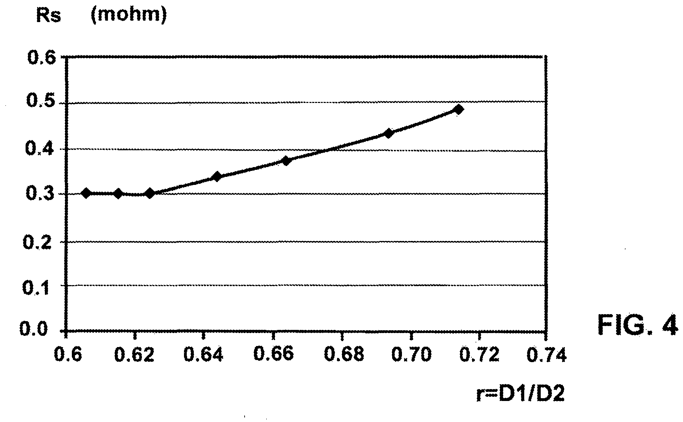

Cela s'explique par le fait que:
- l'accroissement du premier diamètre extérieur D1 du rotor 1 conduit à accroître le flux produit par le rotor 1 (ce qui conduit à accroître le Ke du moteur 1, 11, comme le montre la **Figure 3**) et, ensuite, à réduire le courant statorique nécessaire pour produire le couple;
- quand le premier diamètre extérieur D1 du rotor 1 augmente, en conservant un nombre de tours constant de façon à ne pas accroître l'inductance des bobinages statoriques 14 (seul est pris en compte l'accroissement du premier diamètre extérieur D1 du rotor 1 sur l'inductance du moteur 1, 11), la section du fil doit diminuer parce que la surface des encoches 12 devient plus petite (On garde un taux de remplissage des encoches 12 constant); dans ce cas, la résistance statorique Rs augmente comme le montre la **Figure 4****.**

Le meilleur compromis a été trouvé entre la diminution du courant statorique (grâce à l'augmentation du premier diamètre extérieur D1 du rotor 1) et l'augmentation de la résistance statorique Rs (due à la diminution de la section du fil) pour obtenir des pertes statoriques par effet Joule P_{J} minimum, et, par suite, améliorer le rendement du moteur 1, 11 **(****Figure 2****).**

En effet, si le premier diamètre extérieur D1 du rotor 1 augmente, on doit augmenter une largeur à la fois des dents statoriques 13 et de la carcasse 3, c'est-à-dire un second diamètre extérieur D2 du stator 11, de manière à augmenter le flux magnétique total produit par le moteur 1, 11, et, dans ce cas, la surface des encoches 12 diminue. De ce fait, la section du fil est diminuée, parce que nombre de tours ne doit pas changer.

En calculant le taux de remplissage au cours des simulations, une discontinuité a été notée à cause de la non-linéarité des dimensions du fil (par exemple, il n'existe pas de fil d'une dimension comprise entre 0,53 mm et 0,56 mm).

Comme il va de soi, l'invention ne se limite pas aux seuls modes de réalisation préférentiels décrits ci-dessus.

D'autres modes de réalisation présentant des caractéristiques générales différentes de celles spécifiées ci-dessus, notamment un nombre de pôles différent, et correspondant à d'autres essais ou simulations de moteurs comportant un rotor 1 et un stator 11 du type décrit, ne sortiraient pas du cadre de la présente invention dans la mesure où ils résultent des revendications ci-après.

## Revendications

1. Moteur électrique synchrone à aimants permanents (1, 11) du type de ceux comportant un stator (11) bobiné comprenant des dents statoriques (13) s'étendant axialement formées dans une carcasse (10) et un rotor (1) de type à concentration de flux comprenant une pluralité desdits aimants permanents (3) s'étendant axialement dans des premiers évidements (4) d'une culasse (2), **caractérisé en ce qu'**un rapport dimensionnel (r) d'un premier diamètre externe (D1) dudit rotor (1) à un second diamètre externe (D2) dudit stator (11) est prédéterminé de manière à ce que ledit moteur (1, 11) présente un rendement maximum et de manière à ce que des pertes statoriques par effet Joule (PJ) soient minimum, ledit rapport dimensionnel étant compris entre 0,63 et 0,7, lesdits aimants permanents (3) comportant chacun une première partie parallélépipédique proche d'une partie circonférentielle (5) dudit rotor (1) adjacente à une seconde partie en forme de coin proche d'une partie centrale (6) dudit rotor (1).

2. Moteur électrique synchrone à aimants permanents (1, 11) selon la revendication 1, **caractérisé en ce que** ledit rotor (1) comprend au moins une pluralité de seconds évidements (9) se prolongeant axialement et agencés entre lesdits aimants permanents (3) dans une partie intermédiaire dudit rotor (1) entre ladite partie centrale (6) et ladite partie circonférentielle (5).

3. Moteur électrique synchrone à aimants permanents (1, 11) selon la revendication 2, **caractérisé en ce que** des tirants sont agencés dans lesdits seconds évidements (9).

4. Moteur électrique synchrone à aimants permanents (1, 11) selon l'une quelconque des revendications précédentes, **caractérisé en ce que** lesdits aimants permanents (3) sont constitués de ferrite.

5. Equipement d'un véhicule automobile, **caractérisé en ce qu'**il est constitué d'un moteur électrique synchrone à aimants permanents (1, 11) selon l'une quelconque des revendications 1 à 4.

6. Compresseur électrique destiné à équiper un véhicule automobile, **caractérisé en ce qu'**il comprend un moteur électrique synchrone à aimants permanents (1, 11) selon l'une quelconque des revendications 1 à 4.

## Patentansprüche

1. Elektrischer Synchronmotor mit Dauermagneten (1, 11) von der Art derjenigen, die einen bewickelten Stator (11), der sich axial erstreckende Statorzähne (13) enthält, die in einem Gehäuse (10) geformt sind, und einen Rotor (1) von der Art mit Flusskonzentration aufweisen, der eine Vielzahl der Dauermagnete (3) enthält, die sich axial in ersten Aussparungen (4) eines Zylinderkopfs (2) erstrecken, **dadurch gekennzeichnet, dass** ein Abmessungsverhältnis (r) zwischen einem ersten Außendurchmesser (D1) des Rotors (1) und einem zweiten Außendurchmesser (D2) des Stators (11) so vorbestimmt wird, dass der Motor (1, 11) einen maximalen Wirkungsgrad aufweist und so, dass Stator-Wärmeverluste (PJ) minimal sind, wobei das Abmessungsverhältnis zwischen 0,63 und 0,7 liegt, wobei die Dauermagnete (3) je einen ersten parallelepipedischen Teil nahe einem Umfangsteil (5) des Rotors (1) angrenzend an einen zweiten Teil in Form eines Keils nahe einem zentralen Teil (6) des Rotors (1) aufweisen.

2. Elektrischer Synchronmotor mit Dauermagneten (1, 11) nach Anspruch 1, **dadurch gekennzeichnet, dass** der Rotor (1) mindestens eine Vielzahl von zweiten Aussparungen (9) enthält, die sich axial verlängern und zwischen den Dauermagneten (3) in einem Zwischenteil des Rotors (1) zwischen dem zentralen Teil (6) und dem Umfangsteil (5) angeordnet sind.

3. Elektrischer Synchronmotor mit Dauermagneten (1, 11) nach Anspruch 2, **dadurch gekennzeichnet, dass** Zugstangen in den zweiten Aussparungen (9) angeordnet sind.

4. Elektrischer Synchronmotor mit Dauermagneten (1, 11) nach einem der vorhergehenden Ansprüche, **dadurch gekennzeichnet, dass** die Dauermagnete (3) aus Ferrit bestehen.

5. Ausrüstung eines Kraftfahrzeugs, **dadurch gekennzeichnet, dass** sie aus einem elektrischen Synchronmotor mit Dauermagneten (1, 11) nach einem der Ansprüche 1 bis 4 besteht.

6. Elektrischer Verdichter, der dazu bestimmt ist, ein Kraftfahrzeug auszustatten, **dadurch gekennzeichnet, dass** er einen elektrischen Synchronmotor mit Dauermagneten (1, 11) nach einem der Ansprüche 1 bis 4 enthält.

## Claims

1. Synchronous electric motor with permanent magnets (1, 11) of the type having a wound stator (11) comprising stator teeth (13)extending axially formed in a frame (10) and a flux-concentration type rotor (1) comprising a plurality of said permanent magnets (3) extending axially into first recesses (4) of a yoke (2), **characterized in that** a dimensional ratio (r) of a first outer diameter (D1) of said rotor (1) to a second outer diameter (D2) of said stator (11) is predetermined so that said motor (1, 11) has maximum efficiency and so that the stator losses by Joule effect (PJ) are reduced to a minimum, said dimensional ratio being between 0.63 and 0.7, said permanent magnets (3) each having a first parallelepipedal part near a circumferential part (5) of said rotor (1) adjacent to a second wedge-shaped part near a central part (6) of said rotor (1).

2. Synchronous electric motor with permanent magnets (1, 11) according to Claim 1, **characterized in that** said rotor (1) has at least a plurality of second recesses (9) extending axially and arranged between said permanent magnets (3) in an intermediate part of said rotor (1) between said central part (6) and said circumferential part (5).

3. Synchronous electric motor with permanent magnets (1, 11) according to Claim 2, **characterized in that** tie rods are arranged in said second recesses (9).

4. Synchronous electric motor with permanent magnets (1, 11) according to any one of the preceding claims, **characterized in that** said permanent magnets (3) are made of ferrite.

5. Equipment of a motor vehicle, **characterized in that** it consists of a synchronous electric motor with permanent magnets (1, 11) according to any one of Claims 1 to 4.

6. An electric compressor intended to equip a motor vehicle, **characterized in that** it comprises a synchronous electric motor with permanent magnets (1, 11) according to any one of Claims 1 to 4.
